# EUROPÄISCHE PATENTSCHRIFT

(11) **EP 4 511 897 B1**
(45) Veröffentlichungstag und Bekanntmachung des Hinweises auf die Patenterteilung: **17.12.2025**
(21) Anmeldenummer: 23758218.4
(22) Anmeldetag: 20.07.2023
(51) Int. Cl.: H01M 8/04537, H01M 8/04664, H01M 8/04992, H01M 8/10, H01M 8/1018

(54) **VERFAHREN UND SYSTEM ZUR BEWIRKUNG UND BESTIMMUNG EINES FEHLERS AN EINER PEM BRENNSTOFFZELLE**
METHOD AND SYSTEM FOR EFFECTING AND DETERMINING A DEFECT ON A PEM FUEL CELL
PROCÉDÉ ET SYSTÈME POUR INDUIRE ET DÉTERMINER UNE ERREUR AU NIVEAU D'UNE PILE À COMBUSTIBLE À MEMBRANE ÉLECTROLYTIQUE POLYMÈRE

(30) Priorität: 21.07.2022 AT 505462022
(43) Veröffentlichungstag der Anmeldung: 26.02.2025
(73) Patentinhaber: AVL List GmbH, 8020 Graz (AT)
(72) Erfinder: BRUHN, Tanner, 8020 Graz (AT); ALLOUCHERY, Laurent, 8047 Hart bei Graz (AT)
(86) Internationale Anmeldenummer: PCT/AT2023/060244
(87) Internationale Veröffentlichungsnummer: WO 2024/016043

(56) Entgegenhaltungen:
- EP-B1- 3 563 164
- US-A- 5 945 229
- US-A1- 2007 259 256

## Beschreibung

Die vorliegende Erfindung betrifft ein Verfahren und ein entsprechendes System zur Bewirkung und Bestimmung eines Fehlers und/oder einer Beeinträchtigung an einer PEM Brennstoffzelle.

Das Verfahren und das System gemäß der Erfindung eignen sich zur Untersuchung von Fehlfunktionen und Schädigungen an niedertemperatur Brennstoffzellen mit einer Polymerelektrolytmembran (PEM Brennstoffzellen). Dadurch kann die Entstehung von Fehlern erkannt und untersucht werden, wodurch Rückschlüsse zu deren Vermeidung oder zur Verbesserung von Brennstoffzellen ermöglicht werden.

Es sind verschiedene Messverfahren bekannt, die im Betrieb oder im Stillstand einer Brennstoffzelle bzw. eines Brennstoffzellenstapels in der Systemumgebung der Anwendung der Brennstoffzelle als Leistungsquelle oder auch während dessen Einsatzes Messungen durchführen. Aus den Messungen werden in der Regel Signale erzeugt, die analysiert werden, und somit indirekt einen Rückschluss auf einen Alterungszustand bzw. Degradation einer Brennstoffzelle zulassen.

In einem bekannten Messverfahren zur Erkennung einer Degradation eines katalytischen Elements des Brennstoffzellensystems werden Temperaturen gemessen, die einen indirekten Hinweis auf die Degradation geben können. Die verwendeten Temperaturmessungen werden in Temperaturdatensätze verarbeitet, um einen Temperaturgradienten für den Einlassbereich des katalytischen Elements zu berechnen. Im zweiten Schritt der Methode wird ein Temperaturgradient mit einem Referenzparameter verglichen. Im letzten Schritt wird auf der Grundlage des Vergleichsergebnisses der Degradationsstatus bewertet.

In einem anderen bekannten Messverfahren werden zum Detektieren von Fehlern und/oder Degradation in einer Brennstoffzellenanordnung eine Analyse der Leistungsspektrumsdichte (PSD, "Power Spectrum Density") eines Spannungssignal-Ausgangs durch die Brennstoffzellenanordnung während eines stationären Betriebs durchgeführt und spezifische Fehler und/oder Degradationssignaturen aus spezifischen Mustern, die durch die PSD des gemessenen Spannungssignals erreicht werden, identifiziert.

In einem wiederum anderen bekannten Messverfahren wird eine Analyse einer Leistungsverschlechterung einer Brennstoffzelle durchgeführt. Dabei erfolgt eine Messung der AC-Impedanz, die mit einem Referenzwert verglichen wird. Anhand des Ergebnisses dieses Vergleichs kann die Leistungsverschlechterung der Brennstoffzelle indirekt erkannt werden.

Die genannten Messverfahren und deren Methodik können zwar zum Teil in einer Systemumgebung der Anwendung integriert werden, um eine Überwachung des Alterungszustands über die Lebensdauer bereitzustellen. Die Erkenntnisse hieraus beziehen sich jedoch stets auf die individuelle Nutzung eines spezifischen Modells einer Brennstoffzelle und die individuellen Einflüsse, welche die Brennstoffzelle bzw. ein entsprechender Brennstoffzellenstapel in seiner Anwendung und Systemumgebung über die Lebensdauer erfahren hat. Eine Zusammenführung der Erkenntnisse aus den individuellen Überwachungen können mit erheblichem Aufwand verbunden oder deren Zugang bei einem Endverbraucher am Ende einer Lebensdauer unmöglich sein und ist entsprechend der Lebensdauer mit einem erheblichen Zeithorizont verbunden. Zudem ist eine Messtechnik bzw. eine Analyse individuell anzupassen und deren Erkenntnisse nicht ohne Weiteres auf andere Modelle von PEM Brennstoffzellen oder deren Anwendung übertragbar.

Demnach besteht Bedarf an einer Technik zur universellen Untersuchung von spezifischen Fehlern an einer Struktur oder daraus resultierenden Beeinträchtigungen der Leistungsfähigkeit, die eine Vergleichbarkeit unter beliebigen Modellen von PEM Brennstoffzellen oder eine empirische Untersuchung eines spezifischen Fehlers in einem akzeptablen Zeithorizont ermöglicht.

Verfahren und Systeme zur Bewirkung und Bestimmung eines Fehlers und/oder einer Beeinträchtigung an einer PEM Brennstoffzelle sind beispielsweise aus der EP 3 563 164 B1 und der US 5 945 229 A bekannt.

Es ist eine Aufgabe der Erfindung, eine Technik zu schaffen, die eine universelle und reproduzierbare Untersuchungen von Fehlern oder Beeinträchtigungen bzw. Degradation an PEM Brennstoffzellen ermöglicht. Eine weitere Aufgabe der Erfindung besteht darin, diese Untersuchungen automatisiert und in einem im Rahmen einer Produktentwicklung akzeptablen Zeithorizont umzusetzen.

Die voranstehenden Aufgaben werden gelöst durch ein System mit den Merkmalen des Anspruchs 1 und ein Verfahren mit den Schritten des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Das erfindungsgemäße System ist dazu ausgelegt, einen spezifischen Fehler und/oder eine Beeinträchtigung an einer PEM Brennstoffzelle zu Bewirken und zu Bestimmen. Dazu weist das erfindungsgemäße System verschiedene Systemkomponenten auf. Ein Messmodul zur Messung wenigstens eines Betriebsparameters der Brennstoffzelle und zur Ausgabe eines Fingerabdruckmusters mit einem zeitlichen Signalverlauf eines Messsignals umfasst wenigstens einen Sensor zur Erfassung des wenigstens einen Betriebsparameters an der Brennstoffzelle. Ein Vergleichsmodul dient zum Vergleich des Signalverlaufs des Messsignals aus dem ausgegebenen Fingerabdruckmuster mit einem Signalverlauf eines Referenzsignals aus einem Referenzmuster, wobei in dem Vergleichsmodul verschiedene Referenzmuster mit Signalverläufen von Referenzsignalen, die für verschiedene spezifische Fehler und/oder Beeinträchtigungen charakteristisch sind, bereitgestellt sind. Ein Bestimmungsmodul dient zur Bestimmung, ob der spezifische Fehler und/oder die Beeinträchtigung, für den und/oder die der Signalverlauf des Referenzsignals aus dem zum Vergleich herangezogenen Referenzmuster charakteristisch ist, zumindest graduell eingetreten ist, wobei das Bestimmungsmodul dazu eingerichtet ist, die Bestimmung auf einer gemeinsamen Schnittmenge zwischen den Signalverläufen des Messsignals aus dem Fingerabdruckmuster und des Referenzsignals aus dem Referenzmuster zu treffen.

Erfindungsgemäß umfasst das System ein Prüfstandmodul mit einer Brennstoffgas-Testzufuhr zur Zuführung eines Brennstoffgases an einen Anodenabschnitt der Brennstoffzelle in einem Testbetrieb und eine Oxidationsgas-Testzufuhr zur Zuführung eines Oxidationsgases an einen Kathodenabschnitt der Brennstoffzelle in dem Testbetrieb, sowie eine elektrische Testlast zur Abführung von elektrischer Leistung aus der Brennstoffzelle in dem Testbetrieb. Ferner ist in einem Steuerungsmodul zur Steuerung von Betriebsparametern des Testbetriebs der Brennstoffzelle an dem Prüfstandmodul, insbesondere ein Stressfaktormuster bereitgestellt, in dem kritische Einstellungen und/oder kritische Verläufe von Betriebsparametern zur Bewirkung von Fehlern und/oder Beeinträchtigungen an der Brennstoffzelle in dem Testbetriebs hinterlegt sind.

Analog hierzu sieht erfindungsgemäß das entsprechende Verfahren zur Bewirkung und Bestimmung eines spezifischen Fehlers und/oder einer Beeinträchtigung an einer PEM Brennstoffzelle die folgenden Schritte auf: Einen Schritt zum Messen wenigstens eines Betriebsparameters der Brennstoffzelle durch Erfassen des wenigstens einen Betriebsparameters an der Brennstoffzelle mittels wenigstens einem Sensor, und Ausgeben eines Fingerabdruckmusters mit einem zeitlichen Signalverlauf eines Messsignals. Einen Schritt zum Vergleichen des Signalverlaufs des Messsignals aus dem ausgegebenen Fingerabdruckmuster mit einem Signalverlauf eines Referenzsignals aus einem Referenzmuster mittels Bereitstellen verschiedener Referenzmuster mit Signalverläufen von Referenzsignalen, die für verschiedene spezifische Fehler und/oder Beeinträchtigungen charakteristisch sind. Einen Schritt zum Bestimmen, ob der spezifische Fehler und/oder die Beeinträchtigung, für den und/oder die der Signalverlauf des Referenzsignals aus dem zum Vergleich herangezogenen Referenzmuster charakteristisch ist, zumindest graduell eingetreten ist, wobei das Bestimmen auf einer gemeinsamen Schnittmenge zwischen den Signalverläufen des Messsignals aus dem Fingerabdruckmuster und des Referenzsignals aus dem Referenzmuster basiert.

Erfindungsgemäß ist ein Schritt zum Durchführen eines Testbetriebs auf einem Prüfstand mit einer Brennstoffgas-Testzufuhr zur Zuführung eines Brennstoffgases an einen Anodenabschnitt der Brennstoffzelle in einem Testbetrieb und eine Oxidationsgas-Testzufuhr zur Zuführung eines Oxidationsgases an einen Kathodenabschnitt der Brennstoffzelle in dem Testbetrieb, sowie eine elektrische Testlast zur Abführung von elektrischer Leistung aus der Brennstoffzelle in dem Testbetrieb vorgesehen. Dabei wird insbesondere ein Steuern von Betriebsparametern des Testbetriebs der Brennstoffzelle an dem Prüfstand in Übereinstimmung mit wenigstens einem Stressfaktormuster durchgeführt, in dem kritische Einstellungen und/oder zeitliche Verläufe der Betriebsparameter zur Bewirkung von Fehlern und/oder Beeinträchtigungen an der Brennstoffzelle in dem Testbetriebs hinterlegt sind.

Die Erfindung sieht somit erstmals die Kombination der Mess- und Analysetechnik mit einer universellen Testumgebung vor, in der generische Muster zur Steuerung eines Testbetriebs zur kontrollierten und vorzugsweise beschleunigten sowie reproduzierbaren Alterung bzw. Degradation von Brennstoffzellen eingesetzt werden.

Als ein Vorteil der Erfindung ist die Schaffung eines universellen Systems und Verfahrens zur kontrollierten einheitlichen Prüfung oder Testung von verschiedenen Modellen von PEM Brennstoffzellen anzusehen, das auch eine effizient verkürzte Langzeittestung anhand strapaziöser Stressfaktormuster ermöglicht.

Das System oder Verfahren ist somit sehr flexibel für verschiedene Typen, Aufbauten und Größen von PEM Brennstoffzellen geeignet und ist vor allem für eine Produktentwicklung oder experimentellen Untersuchung von besonderem Wert.

Als ein weiterer Vorteil der Erfindung wird eine automatisierte Erkennung von Alterungserscheinungen, wie leichte oder kritische Beeinträchtigungen der Leistung, der Struktur oder der Integrität einer PEM Brennstoffzelle zur Vermeidung vollständiger Fehlfunktion durch bekannte spezifische Fehler bzw. Beschädigungen ermöglicht.

Ebenso liegt ein Vorteil der Erfindung darin, dass das System oder das Verfahren seitens des Herstellers bzw. Anbieters mit einer Auswahl an generischen Referenzmustern mit einer Basisreferenzkurve des Referenzsignals für eine Auswahl bekannter Fehlerbilder gespeist werden, zu deren Diagnose das System oder Verfahren den Kunden befähigt.

Unter dem Begriff Betriebsparameter definiert die vorliegende Offenbarung verschiedene Stellgrößen wie z.B. Gasmengen, elektrische Leistungsanforderung bzw. - abnahme, Temperaturen von Reaktanten sowie daraus resultierende Größen wie z.B. eine Ausgangsspannung oder Leerlaufspannung der Brennstoffzelle, oder Temperaturen von Produkten, chemische Konzentrationen einzelner Stoffe in Produkten usw., die im Testbetrieb aktiv eingestellt bzw. geregelt oder passiv auftreten bzw. gemessen werden können.

Unter dem Begriff Messsignal definiert die vorliegende Offenbarung ein Signal, das direkt den Wert einer erfassten Messgröße eines Sensors wiedergibt oder indirekt aus erfassten Messgröße ableitbar ist.

Unter dem Begriff Fingerabdruckmuster definiert die vorliegende Offenbarung einen über einen Zeitabschnitt erfassten Kurvenverlauf eines Signalpegels eines Messsignals.

Unter dem Begriff Referenzsignal definiert die vorliegende Offenbarung ein Signal, das von gleicher Art und Bedeutung wie ein Messsignal ist, zu dessen Vergleich es herangezogen wird.

Unter dem Begriff Referenzmuster definiert die vorliegende Offenbarung einen über einen Zeitabschnitt hinterlegten Kurvenverlauf eines Signalpegels des Referenzsignals, wobei der Kurvenverlauf insbesondere charakteristische Abschnitte, wie Wendepunkte, Konstanten, obere und untere Grenzwerte oder dergleichen umfasst, deren zeitlicher Zusammenhang und Abweichung von Werten und Verläufen, wie sie für eine neue oder schadlosen Brennstoffzelle üblich wären, abweichen.

Unter dem Begriff gemeinsame Schnittmenge definiert die vorliegende Offenbarung gemeinsamer charakteristischer Merkmale der Kurvenverläufe von Signalen, wie eine Anzahl von Wendepunkten, eine Amplitude, ein zeitliches Verhalten wie eine Amplitudenweite, Frequenz oder dergleichen.

Unter dem Begriff spezifische Fehler definiert die vorliegende Offenbarung typische Arten von Schäden an einer Struktur einer Brennstoffzelle, wie eine Verdünnung oder Beschädigung z.B. in Form von Löchern oder Rissen in einer Membran oder einer Deaktivierung von Bereichen in einer Dicke oder Fläche von Katalysatorschichten.

Unter dem Begriff Beeinträchtigung definiert die vorliegende Offenbarung verschiedene Herabsetzungen der Leistungsfähigkeit der Brennstoffzelle in Bezug auf Parameter wie Ausgangsspannung oder Ausgangstrom im Verhältnis zu Eingangsparametern einer Zufuhr von Reaktanten, oder einer Herabsetzung elektrochemischer oder physikalischer Vorgänge, die in einer Brennstoffzelle ablaufen. Die Beeinträchtigungen können insbesondere graduell zunehmend auftreten oder festgestellt werden und sie können eine direkte oder indirekte Folge eines spezifischen Fehlers bzw. Schädigung an der Struktur der Brennstoffzelle oder sonstigen Alterungsphänomenen sein.

Unter dem Begriff Stressfaktormuster definiert die vorliegende Offenbarung ein statisches oder dynamisches Kennfeld von hinterlegten Betriebsparametern mit Stellgrößen wie z.B. Gasmengen, elektrische Leistungsanforderung bzw. -abnahme, Temperaturen von Reaktanten, oder ein statisches oder dynamisches Kennfeld von Zielwerten resultierender Größen wie z.B. eine Ausgangsspannung oder Leerlaufspannung der Brennstoffzelle.

Unter dem Begriff kritische Einstellung oder kritische Verläufe von Betriebsparametern definiert die vorliegende Offenbarung absolute Werte, deren mittlere Zeitdauer oder deren dynamische Änderung, wie z.B. insbesondere zyklische hohe Ausgangsspannungen oder Leerlaufspannungen, die so gewählt sind, dass sie einen reproduzierbaren Testbetrieb an der zu testenden Brennstoffzelle bewirken, der nach fachlichen Erkenntnissen eine extreme Beanspruchung und eine schnelle Einleitung von Alterungseffekten erzielen.

Gemäß einem vorteilhaften Aspekt der Erfindung kann das wenigstens eine Stressfaktormuster einen zyklischen Verlauf von Betriebsparametern zur Erzielung eines zyklischen Verlaufs einer Ausgangsspannung der Brennstoffzelle mit definierten Spannungsspitzen aufweist. Demnach kann eine Beanspruchung der Brennstoffzelle mit einer definierten Anzahl an Spannungsspitzen oder definierten Gesamtdauer an erhöhten Spannungsplateaus der Ausgangs- oder Leerlaufspannung der Brennstoffzelle über eine Testbetriebsdauer erzielt werden, die eine Schädigung der Brennstoffzellenstruktur in einstellbarer und reproduzierbarer Weise provozieren.

Gemäß einem vorteilhaften Aspekt der Erfindung können die Signalverläufe des Messsignals und des Referenzsignals bei dem Vergleich oder der Bestimmung eines Fehlers auf einen gemeinsamen Nullpunkt und/oder Maßstab normiert werden, und die gemeinsame Schnittmenge basierend auf einer Überschneidung einer Amplitudenweite und/oder einer Amplitudenfrequenz der normierten Signalverläufe ermittelt werden. Auf diese Weise ist das System oder das Verfahren in der Lage anhand vorab abgespeicherter, generischer Referenzmuster mit einer voreingestellten Parametergröße und zeitlichem Verhalten an beliebigen Modellen von Brennstoffzellen mit unterschiedlichen Parametergrößen und zeitlichem Verhalten bekannte Fehlerbilder zu untersuchen.

Gemäß der Erfindung wird infolge einer Bestimmung, dass ein spezifischer Fehler oder eine Beeinträchtigung vorliegt, ein Diagnose-Ausgabesignal ausgegeben, das eine prozentuale Diagnose-Wahrscheinlichkeit zu dem spezifischen Fehler und/oder Beeinträchtigung umfasst, deren Prozentsatz auf der Schnittmenge zwischen den Signalverläufen des Messsignals und des Referenzsignals basiert.

Gemäß einem vorteilhaften Aspekt der Erfindung kann eine Editierung eines bereitgestellten Referenzmusters vorgenommen werden, basierend auf einer für die Brennstoffzelle spezifischen Anpassung des Signalverlaufs des Referenzsignals in dem Referenzmuster an den Signalverlauf des Messsignals desjenigen Fingerabdruckmusters, zu dem bestimmt wurde, dass der spezifische Fehler und/oder die Beeinträchtigung, für den und/oder die der Signalverlauf des Referenzsignals aus dem Referenzmuster charakteristisch ist, zumindest graduell eingetreten ist. Somit kann in dem universellen System oder Verfahren ein generisches Referenzmuster kundenspezifisch in Bezug auf ein konkretes untersuchtes Modell individualisiert werden, um eine Fehlererkennung für das konkrete Modell zu verbessern.

Gemäß einem vorteilhaften Aspekt der Erfindung kann das System oder das Verfahren ferner einen Signalgenerator zur Anlegung eines auf Wechselspannung basierten Anregungssignals an der Brennstoffzelle verwenden, wobei der wenigstens eine Sensor eine auf Wechselspannung basierte Signalantwort erfasst, die aus einer Wechselwirkung zwischen dem Anregungssignal und der Brennstoffzelle resultiert. Durch diese Technik kann die Messmethodik auf eine Wechselstrom-Impedanzmessung durch aktive Signalanregung und passive Signalantwort zur Untersuchung eines Zustands der Brennstoffzelle erweitert werden.

Alternativ kann gemäß einem Aspekt der Erfindung die verwendete Messtechnik in dem System oder dem Verfahren einen Spannungssensor zur Erfassung der Ausgangsspannung der Brennstoffzelle, einen Wasserstoffsensor zur Erfassung einer Wasserstoffkonzentration auf einer Kathodenseite der Brennstoffzelle, einen Leitfähigkeitssensor zur Erfassung einer Leitfähigkeit in einem aus der Brennstoffzelle abgeführten Produktwasser, und/oder einen virtuellen Sensor, der basierend auf indirekten Messungen anderer physischer Sensoren mittels eines Degradationsmodells einer Analysesoftware auf dem Messmodul emuliert wird, umfassen.

Darüber hinaus gemäß einem Aspekt der Erfindung das erfindungsgemäße Verfahren in einem Computerprogramm umgesetzt sein, das die Schritte im Zusammenhang mit der erforderlichen Hardware, wie sie in dem erfindungsgemäßen System enthalten ist, ausführt.

Weitere Vorteile, Merkmale und Einzelheiten der Erfindung ergeben sich aus der nachfolgenden Beschreibung, in der unter Bezugnahme auf die Zeichnungen, Ausführungsbeispiele der Erfindung im Einzelnen beschrieben sind. Es zeigen schematisch:
- Fig. 1: ein schematisches Blockdiagramm der Systemkomponenten in einer Ausführungsform des erfindungsgemäßen Systems,
- Fig. 2: ein Diagramm zur Darstellung verschiedener Verläufe einer Ausgangs- oder Leerlaufspannung einer zu testenden Brennstoffzelle, die durch eine Steuerung der Betriebsparameter anhand verschiedener Stressfaktormuster im Testbetrieb erzielt werden können,
- Fig. 3A: ein Diagramm eines Messsignals entsprechend einer Erfassung eines Parameters an der Brennstoffzelle durch einen Sensor, dessen Verlauf als Fingerabdruckmuster indirekt einen Rückschluss auf eine erste Art einer Degradation zulässt,
- Fig. 3B: ein Diagramm eines Messsignals entsprechend einer Erfassung eines Parameters an der Brennstoffzelle durch einen Sensor, dessen Verlauf als Fingerabdruckmuster indirekt einen Rückschluss auf eine zweite Art einer Degradation zulässt,
- Fig. 3C: ein Diagramm eines Messsignals entsprechend einer Erfassung eines Parameters an der Brennstoffzelle durch einen Sensor, dessen Verlauf als Fingerabdruckmuster indirekt einen Rückschluss auf eine dritte Art einer Degradation zulässt, und
- Fig. 4: ein Flussdiagramm, das eine beispielgebende Ursachenkette darstellt, die zu einem spezifischen Fehler an einer Brennstoffzellenstruktur führt.

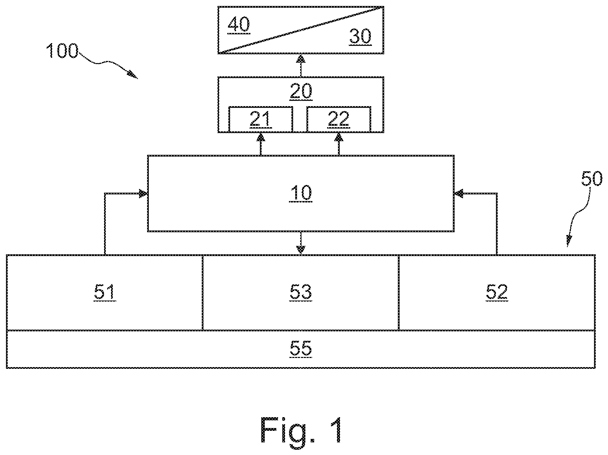

In Fig. 1 zeigt schematisch in einem Blockdiagramm eine Ausführungsform eines Aufbaus eines Systems 100 zur Bewirkung und Bestimmung eines spezifischen Fehlers und/oder einer Beeinträchtigung an einer PEM Brennstoffzelle 10. Das System 100 umfasst als Systemkomponenten unter anderem verschiedene nachfolgend erläuterte Module.

Die zu prüfende bzw. zu testende Brennstoffzelle 10 oder auch ein Brennstoffzellenstapel kann von einem beliebigen Modell oder Typ von PEM Brennstoffzellen sein, über die im Rahmen einer wissenschaftlichen Untersuchung, einer Fehleranalyse, einer Produktentwicklung oder dergleichen Erkenntnisse gewonnen werden sollen.

Ein Prüfstandmodul 50 stellt ein Testumfeld dar, das einen Betrieb der zu testenden Brennstoffzelle 10 unter Laborbedingungen ermöglicht. Dazu gehören unter anderem eine Brennstoffgas-Testzufuhr 51 mit z.B. (nicht dargestellt) einem Wasserstoffgastank, einem Regelventil und einem Anschluss, der mit einem Anodenabschnitt der Brennstoffzelle 10 verbunden wird. Ebenso ein Oxidationsgas-Testzufuhr 52 mit z.B. (nicht dargestellt) einem Kompressor zur Zuführung von Luftsauerstoff, einem Regelventil und/oder Drehzahlregelung des Kompressors und einem Anschluss, der mit einem Kathodenabschnitt der Brennstoffzelle 10 verbunden wird. Ferner wird eine Testlast 53 mit einer regelbaren Leistungsaufnahme von bzw. -anforderung an die Brennstoffzelle 10 angeschlossen, die durch eine Wärmesenke oder einen elektromotorischen Verbraucher bereitgestellt wird. Regelbare Stellglieder der Brennstoffgas-Testzufuhr 51 und der Oxidationsgas-Testzufuhr 52 sowie eine Schaltung, insbesondere Leistungselektronik der Testlast 53 sind mit einem Steuerungsmodul 55 gemeinsam verbunden, aus dem mittels Signalen Betriebsparameter für den Testbetrieb der Brennstoffzelle 10 gesteuert und geregelt werden.

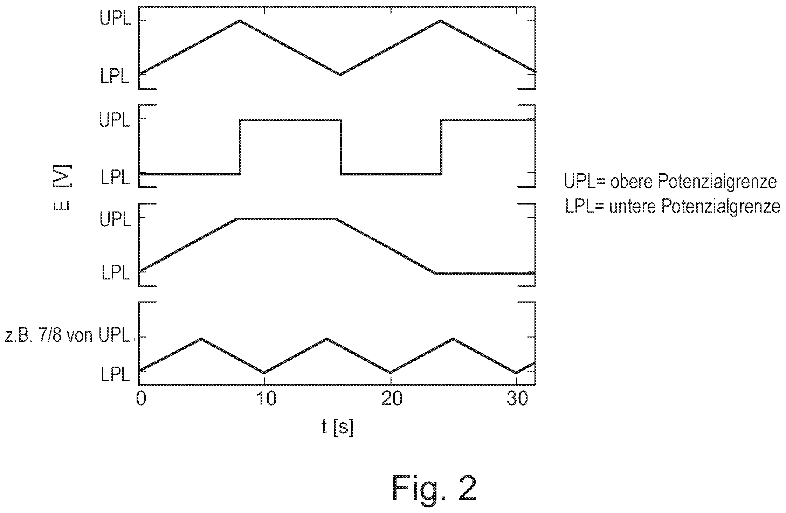

In dem Steuerungsmodul 55 sind verschiedene allgemeine Stressfaktormuster gespeichert, die von einem Nutzer ausgewählt werden können, um verschiedene Beanspruchungen und Alterungsszenarien an der zu testenden Brennstoffzelle 10 reproduzierbar durchzuführen. Dabei werden die Betriebsparameter im Testbetrieb in Übereinstimmung mit dem gewählten Stressfaktormuster gesteuert und geregelt, wie später im Zusammenhang mit Fig. 2 erläutert wird.

Das System 100 umfasst zudem ein Messmodul 20, das verschiedene Arten von Messtechnik repräsentiert. So umfasst das Messmodul 20 mindestens einen Sensor 21, der eine Betriebsgröße an der Brennstoffzelle 10 erfasst. Vorzugsweise sind mehrere unterschiedliche Typen von Sensoren 21, wie ein Spannungssensor, ein Stromsensor, ein Temperatursensor, ein Drucksensor für einen Gasdruck, ein Konzentrationssensor für eine Konzentration von Wasserstoff (H2) oder Wasserstoff-Fluorid (HF), oder ein Leitfähigkeitssensor für eine Leitfähigkeit in Flüssigkeiten zur Untersuchung der Leistung und zugeführten oder abgeführten Fluide bereitgestellt.

In der dargestellten Ausführungsform umfasst das System 100 ferner einen Signalgenerator 22, der im Rahmen einer Messtechnik zur Impedanzspektroskopie ein Anregungssignal, wie ein Wechselstromsignal mit Frequenzmodulation, an den Elektroden der Brennstoffzelle 10 anlegt, im Zusammenhang mit einem Spannungssensor 21, der eine resultierende Signalantwort in Wechselwirkung mit dem Zustand der Struktur der Brennstoffzelle 10 erfasst.

Das Messmodul 20 wandelt die erfasste Messgröße eines Sensors 21 in ein digitales Messsignal um, das einer weiteren Datenverarbeitung zur Analyse unterzogen werden kann. Zu diesem Zweck dienen ein Vergleichsmodul 30 und ein Bestimmungsmodul 40, die als Softwaretool oder Unterprogramme eines Computerprogramms für das Verfahren umgesetzt sein können.

In dem Vergleichsmodul 30 sind allgemeine Referenzmuster abgespeichert, die charakteristische Kurvenverläufe von relevanten Betriebsparametern enthalten, die direkt oder indirekt typisch für das Verhalten einer Brennstoffzelle 10 bei spezifischen Fehlern bzw. Schäden sind. Das Vergleichsmodul 30 oder alternativ das Bestimmungsmodul 40 normiert die Signalverläufe des Messsignals und des Referenzsignals welche dieselbe Messgröße eines Betriebsparameters betreffen, auf einen gemeinsamen Nullpunkt und/oder einen gemeinsamen Maßstab, sodass Gemeinsamkeiten eines absoluten oder qualitativen Kurvenverlaufs auch bei verschiedenen Arten und Dimensionierungen von Brennstoffzellen 10 besser und universell vergleichbar sind. Je nach einem Maß an Übereinstimmungen von charakteristischen Merkmalen des Kurvenverlaufs, die als relevant für einen indirekten Rückschluss auf ein Fehlerbild selektiert sind, d.h. basierend auf dem Betrag einer gemeinsamen Schnittmenge derartiger Gemeinsamkeiten (Anzahl von Wendepunkten, absolute Werte, Mittelwerte oder dergleichen) bestimmt das Bestimmungsmodul 40, ob ein spezifischer Fehler eingetreten ist. Dabei ermittelt das Bestimmungsmodul 40 anhand des Betrags der Schnittmenge auch die Diagnose-Wahrscheinlichkeit, dass der Fehler eingetreten ist. Alternativ oder zusätzlich ermittelt das Bestimmungsmodul 40 basierend auf den Werten in der Schnittmenge, wie stark der spezifische Fehler oder eine daraus resultierende Beeinträchtigung der Struktur oder der Leistungsfähigkeit der Brennstoffzelle 10 fortgeschritten ist.

Fig. 2 zeigt verschiedene übereinandergelegte Stressfaktormuster für den Testbetrieb einer zu testenden Brennstoffzelle 10. Genauer genommen zeigt das Diagramm, dass durch beispielgebende Arten einer zyklischen Steuerung von Betriebsparametern anhand verschiedener Stressfaktormuster im Testbetrieb, verschiedene Verläufe eines elektrischen Feldes zwischen den Elektroden in der Brennstoffzelle 10, die mittels der anliegenden Spannung messbar sind, hervorgerufen werden.

So entsteht beispielsweise eine dreieckförmige Modulation, eine rechteckige Wellen-Modulation, eine dreieckige Wellen-Modulation mit gehaltenem Potentialniveau oder eine dreieckige Wellen-Modulation mit verringerten Potentialspitzen, die basierend auf empirischen Untersuchungen unterschiedlich hohe, reproduzierbare Alterungs- bzw. Schädigungsraten an der Brennstoffzellenstruktur im Dauertest herbeiführen.

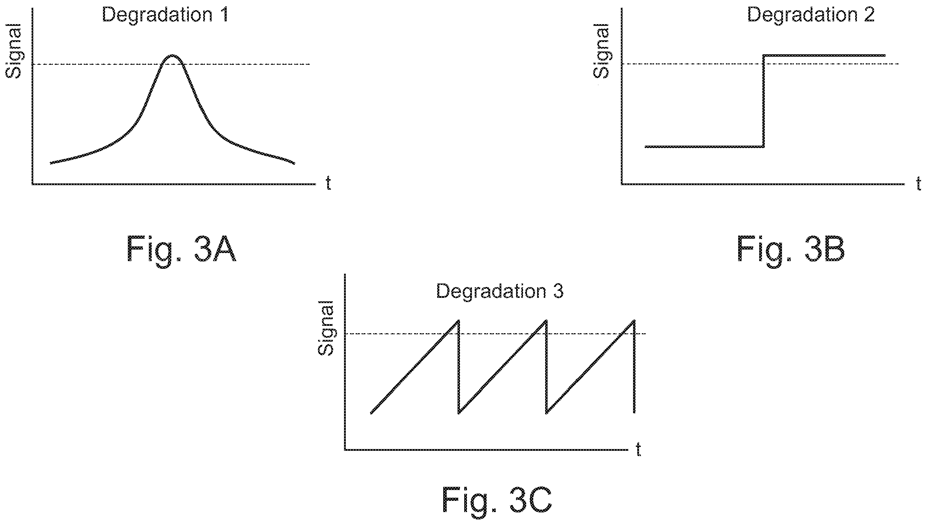

Die Figuren 3A, 3B und 3C zeigen Diagramme zu beispielgebenden Fingerabdruckmustern, die von einem üblichen Verhalten bzw. einem Signalverlauf einer neuen oder unbeschädigten Zelle unter Berücksichtigung des vorgegebenen Verlaufs der Betriebsparameter im Testbetrieb abweichen. Dabei betreffen die Figuren 3A, 3B und 3C illustrativ verschiedene Messsignale entsprechend den erfassten Messgrößen von unterschiedlichen Arten von Sensoren 21 in Bezug auf relevante Betriebsparameter, zu denen ein charakteristisch abweichendes Verhalten im Zusammenhang mit bestimmten Fehlerbildern von spezifischen Fehlern, wie z.B. eine Verdünnung oder Beschädigung der Membran oder einer Reduzierung eines aktiven Katalysatormaterials bekannt ist.

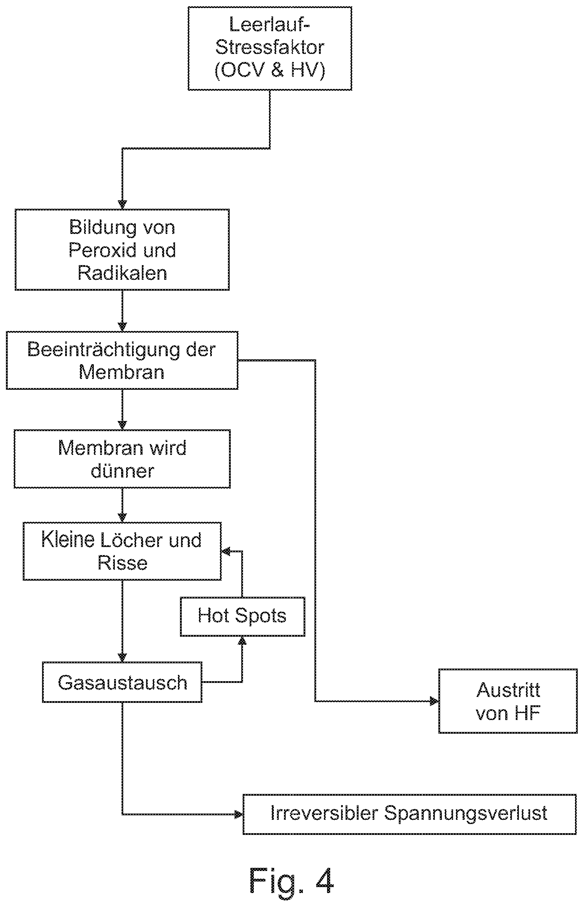

Fig. 4 zeigt zum Verständnis des Hergangs einer Schädigung der Brennstoffzellenstruktur eine beispielgebende Kette von Ursachen, die zu dem spezifischen Fehler einer Membranbeschädigung führen.

Dabei werden in einem Testbetrieb gemäß einem Stressfaktormuster zyklisch bestimmte Pegel und Haltedauern einer Leerlaufspannung (OCV) oder hohen Ausgangsspannung (HV) beispielsweise durch eine Drosselung der Leistungsabnahme von der Testlast 53 unter Zufuhr der Reaktionsgase über die Brennstoffgas-Testzufuhr 51 und die Oxidationsgas-Testzufuhr 52 in der Brennstoffzelle 10 bewirkt. Die hohen Spannungen in der Brennstoffzelle 10 begünstigen schädliche elektrochemische Prozesse wie eine Bildung von Wasserstoffperoxid oder freien radikalen Spezien, welche nach und nach die Substanz der Polymerelektrolytmembran angreifen. Im weiteren Verlauf wird die Membran dünner, sodass deren Integrität gefährdet ist. Danach entstehen kleine Löcher und schließlich Risse, wodurch ein Gasaustausch zwischen der Anode und der Kathode nicht mehr aufgehalten wird. Der Gasaustausch führt zu lokalen exothermen Reaktionen bzw. Hot Spots, die ihrerseits zu weiteren Folgeschäden an der Membran und weiteren Strukturen wie dem katalytischen Material führen.

Je nach eingesetzter Messtechnik in dem Messmodul 20 lassen sich die verschiedenen Stadien der Schädigung bzw. eines spezifischen Fehlers, wie eine Verdünnung der Membran durch geeignete Sensorik vorab erkennen. Beispielsweise zeichnet sich eine angehende Beeinträchtigung der Membran durch die Freisetzung von Wasserstoff-Fluorid (HF) oder in einem späteren Stadium von Wasserstoff (H2) in dem Produktwasser ab, was durch eine geeignete Konzentrationsmessung oder Leitfähigkeitsmessung in dem Produktwasser erfasst werden kann. Ein als Fingerabdruckmuster des entsprechenden Messsignals ausgewerteter Vergleich mit einem Referenzmuster, das charakteristische Werte und/oder Verläufe in Bezug auf die HF Konzentration oder H2 Konzentration bzw. eine hierzu indirekte Leitfähigkeit des Produktwassers enthält, führt zu einer automatisierten Bestimmung eines Fehlerzustands während des Testbetriebs. In einem wiederum späteren Stadium lässt sich selbige Messmethodik auch anhand eines Spannungsverlustes erkennen.

Die voranstehenden Erläuterungen der Ausführungsformen beschreiben die vorliegende Erfindung ausschließlich im Rahmen von Beispielen.

### Bezugszeichenliste

- 10: Brennstoffzelle
- 20: Messmodul
- 21: Sensor
- 22: Signalgenerator
- 30: Vergleichsmodul
- 40: Bestimmungsmodul
- 50: Prüfstandmodul
- 51: Brennstoffgas-Zufuhr
- 52: Oxidationsgas-Zufuhr
- 53: Testlast
- 55: Steuerungsmodul
- 100: System

## Patentansprüche

1. System (100) zur Bewirkung und Bestimmung eines spezifischen Fehlers und/oder einer Beeinträchtigung an einer PEM Brennstoffzelle (10), aufweisend:
ein Messmodul (20) zur Messung wenigstens eines Betriebsparameters der Brennstoffzelle (10) und zur Ausgabe eines Fingerabdruckmusters mit einem zeitlichen Signalverlauf eines Messsignals, umfassend wenigstens einen Sensor (21) zur Erfassung des wenigstens einen Betriebsparameters an der Brennstoffzelle (10);
ein Vergleichsmodul (30) zum Vergleich des Signalverlaufs des Messsignals aus dem ausgegebenen Fingerabdruckmuster mit einem Signalverlauf eines Referenzsignals aus einem Referenzmuster, wobei in dem Vergleichsmodul (30) verschiedene Referenzmuster mit Signalverläufen von Referenzsignalen, die für verschiedene spezifische Fehler und/oder Beeinträchtigungen charakteristisch sind, bereitgestellt sind;
ein Bestimmungsmodul (40) zur Bestimmung, ob der spezifische Fehler und/oder die Beeinträchtigung, für den und/oder die der Signalverlauf des Referenzsignals aus dem zum Vergleich herangezogenen Referenzmuster charakteristisch ist, zumindest graduell eingetreten ist, wobei das Bestimmungsmodul (40) dazu eingerichtet ist, die Bestimmung auf einer gemeinsamen Schnittmenge zwischen den Signalverläufen des Messsignals aus dem Fingerabdruckmuster und des Referenzsignals aus dem Referenzmuster zu treffen; ferner aufweisend
ein Prüfstandmodul (50) mit einer Brennstoffgas-Testzufuhr (51) zur Zuführung eines Brennstoffgases an einen Anodenabschnitt der Brennstoffzelle (10) in einem Testbetrieb und einer Oxidationsgas-Testzufuhr (52) zur Zuführung eines Oxidationsgases an einen Kathodenabschnitt der Brennstoffzelle (10) in dem Testbetrieb, sowie einer elektrischen Testlast (53) zur Abführung von elektrischer Leistung aus der Brennstoffzelle (10) in dem Testbetrieb;
ein Steuerungsmodul (55) zur Steuerung von Betriebsparametern des Testbetriebs der Brennstoffzelle (10) an dem Prüfstandmodul (50), wobei in dem Steuerungsmodul (55) wenigstens ein Stressfaktormuster bereitgestellt ist, in dem Einstellungen und/oder kritische Verläufe von Betriebsparametern zur Bewirkung von Fehlern und/oder Beeinträchtigungen an der Brennstoffzelle (10) in dem Testbetriebs hinterlegt sind,
**dadurch gekennzeichnet, dass** das System (100) ferner aufweist:
ein Diagnoseausgabemodul zur Ausgabe eines Diagnose-Ausgabesignals, das eine prozentuale Diagnose-Wahrscheinlichkeit zu dem spezifischen Fehler und/oder Beeinträchtigung umfasst, deren Prozentsatz auf der Schnittmenge zwischen den Signalverläufen des Messsignals und des Referenzsignals basiert.

2. System (100) nach Anspruch 1, wobei das in dem Steuerungsmodul (55) bereitgestellte wenigstens eine Stressfaktormuster einen zyklischen Verlauf von Betriebsparametern zur Erzielung eines zyklischen Verlaufs einer Ausgangsspannung der Brennstoffzelle (10) mit definierten Spannungsspitzen aufweist.

3. System (100) nach Anspruch 1 oder 2, wobei das Vergleichsmodul (30) und/oder das Bestimmungsmodul (40) dazu eingerichtet ist, die Signalverläufe des Messsignals und des Referenzsignals auf einen gemeinsamen Nullpunkt und/oder Maßstab zu normieren, und die gemeinsame Schnittmenge basierend auf einer Überschneidung einer Amplitudenweite und/oder einer Amplitudenfrequenz der normierten Signalverläufe zu ermitteln.

4. System (100) nach einem der vorhergehenden Ansprüche, ferner aufweisend ein Editionsmodul zum Editieren eines bereitgestellten Referenzmusters basierend auf einer für die Brennstoffzelle (10) spezifischen Anpassung des Signalverlaufs des Referenzsignals in dem Referenzmuster an den Signalverlauf des Messsignals desjenigen Fingerabdruckmusters, zu dem bestimmt wurde, dass der spezifische Fehler und/oder die Beeinträchtigung, für den und/oder die der Signalverlauf des Referenzsignals aus dem Referenzmuster charakteristisch ist, zumindest graduell eingetreten ist.

5. System (100) nach einem der vorhergehenden Ansprüche, wobei das Messmodul (20) ferner einen Signalgenerator (22) zur Anlegung eines auf Wechselspannung basierten Anregungssignals an der Brennstoffzelle (10) aufweist, wobei der wenigstens eine Sensor (21) eine auf Wechselspannung basierte Signalantwort erfasst, die aus einer Wechselwirkung zwischen dem Anregungssignal und der Brennstoffzelle (10) resultiert.

6. System (100) nach einem der vorhergehenden Ansprüche, wobei der wenigstens eine Sensor (21) des Messmoduls (20) ein
Spannungssensor zur Erfassung der Ausgangsspannung der Brennstoffzelle (10),
Wasserstoffsensor zur Erfassung einer Wasserstoffkonzentration auf einer Kathodenseite,
Leitfähigkeitssensor zur Erfassung einer Leitfähigkeit eines Produktwassers,
und/oder
virtueller Sensor ist, der mittels eines Degradationsmodells einer Analysesoftware auf dem Messmodul (20) emuliert wird.

7. Verfahren zur Bewirkung und Bestimmung eines spezifischen Fehlers und/oder einer Beeinträchtigung an einer PEM Brennstoffzelle (10), aufweisend die folgenden Schritte:
Messen wenigstens eines Betriebsparameters der Brennstoffzelle (10) durch Erfassen des wenigstens einen Betriebsparameters an der Brennstoffzelle (10) mittels wenigstens einem Sensor (21), und Ausgeben eines Fingerabdruckmusters mit einem zeitlichen Signalverlauf eines Messsignals;
Vergleichen des Signalverlaufs des Messsignals aus dem ausgegebenen Fingerabdruckmuster mit einem Signalverlauf eines Referenzsignals aus einem Referenzmuster mittels Bereitstellen verschiedener Referenzmuster mit Signalverläufen von Referenzsignalen, die für verschiedene spezifische Fehler und/oder Beeinträchtigungen charakteristisch sind;
Bestimmen, ob der spezifische Fehler und/oder die Beeinträchtigung, für den und/oder die der Signalverlauf des Referenzsignals aus dem zum Vergleich herangezogenen Referenzmuster charakteristisch ist, zumindest graduell eingetreten ist, wobei das Bestimmen auf einer gemeinsamen Schnittmenge zwischen den Signalverläufen des Messsignals aus dem Fingerabdruckmuster und des Referenzsignals aus dem Referenzmuster basiert, ferner aufweisend die Schritte:
Durchführen eines Testbetriebs auf einem Prüfstand mit einer Brennstoffgas-Testzufuhr (51) zur Zuführung eines Brennstoffgases an einen Anodenabschnitt der Brennstoffzelle (10) in einem Testbetrieb und einer Oxidationsgas-Testzufuhr (52) zur Zuführung eines Oxidationsgases an einen Kathodenabschnitt der Brennstoffzelle (10) in dem Testbetrieb, sowie einer elektrischen Testlast (53) zur Abführung von elektrischer Leistung aus der Brennstoffzelle (10) in dem Testbetrieb; und
Steuern von Betriebsparametern des Testbetriebs der Brennstoffzelle (10) an dem Prüfstand (50) in Übereinstimmung mit wenigstens einem Stressfaktormuster, in dem Einstellungen und/oder zeitliche Verläufe der Betriebsparameter zur Bewirkung von Fehlern und/oder Beeinträchtigungen an der Brennstoffzelle (10) in dem Testbetriebs hinterlegt sind,
**gekennzeichnet durch** die Schritte:
Ausgeben eines Diagnose-Ausgabesignals, das eine prozentuale Diagnose-Wahrscheinlichkeit zu dem spezifischen Fehler und/oder Beeinträchtigung umfasst, deren Prozentsatz auf der Schnittmenge zwischen den normierten Signalverläufen des Messsignals und des Referenzsignals basiert.

8. Verfahren (100) nach Anspruch 8, wobei wenigstens eine Stressfaktormuster einen zyklischen Verlauf von Betriebsparametern zur Erzielung eines zyklischen Verlaufs einer Ausgangsspannung der Brennstoffzelle (10) mit definierten Spannungsspitzen aufweist.

9. Verfahren nach Anspruch 8 oder 9, wobei der Schritt des Vergleichens und/oder des Bestimmens ferner folgende Zwischenschritte umfasst:
Normieren der Signalverläufe des Messsignals und des Referenzsignals auf einen gemeinsamen Nullpunkt und/oder Maßstab; und
Ermitteln der gemeinsamen Schnittmenge basierend auf einer Überschneidung einer Amplitudenweite und/oder einer Amplitudenfrequenz der normierten Signalverläufe.

10. Verfahren nach einem der Ansprüche 8 bis 11, ferner aufweisend den Schritt:
Editieren eines bereitgestellten Referenzmusters basierend auf einer für die Brennstoffzelle (10) spezifischen Anpassung des Signalverlaufs des Referenzsignals in dem Referenzmuster an den Signalverlauf des Messsignals desjenigen Fingerabdruckmusters, zu dem bestimmt wurde, dass der spezifische Fehler und/oder die Beeinträchtigung, für den und/oder die der Signalverlauf des Referenzsignals aus dem Referenzmuster charakteristisch ist, zumindest graduell eingetreten ist.

11. Verfahren nach einem der Ansprüche 8 bis 12, wobei der Schritt des Messens ferner folgende Zwischenschritte aufweist:
Anlegen eines auf Wechselspannung basierten Anregungssignals an der Brennstoffzelle (10) mittels eins Signalgenerators (22); und
Erfassen einer auf Wechselspannung basierten Signalantwort, die aus einer Wechselwirkung zwischen dem Anregungssignal und der Brennstoffzelle (10) resultiert, mittels des wenigstens einen Sensors (21).

12. Verfahren nach einem der Ansprüche 8 bis 13, wobei der Schritt des Messens ferner wenigstens einen der folgenden Zwischenschritte aufweist:
Erfassen der Ausgangsspannung der Brennstoffzelle (10) mittels eines Spannungssensors,
Erfassen einer Wasserstoffkonzentration auf einer Kathodenseite mittels eines Wasserstoffsensors,
Erfassen einer Leitfähigkeit eines Produktwassers mittels eines Leitfähigkeitssensors, und/oder
Emulieren eines virtuellen Sensors mittels eines Degradationsmodells einer Analysesoftware auf dem Messmodul (20).

13. Computerprogramm, umfassend Befehle, die bei der Ausführung des Computerprogramms durch einen Computer, diesen veranlassen die Schritte des Verfahrens nach einem der Ansprüche 8 bis 14 auszuführen.

## Claims

1. System (100) for inducing and determining a specific fault and/or impairment in a PEM fuel cell (10), comprising:
a measuring module (20) for measuring at least one operating parameter of the fuel cell (10) and for outputting a fingerprint pattern with a time-dependent signal profile of a measurement signal, comprising at least one sensor (21) for detecting the at least one operating parameter in the fuel cell (10);
a comparison module (30) for comparing the signal profile of the measurement signal from the output fingerprint pattern with a signal profile of a reference signal from a reference pattern, wherein the comparison module (30) provides various reference patterns with signal profiles of reference signals that are characteristic of different specific faults and/or impairments;
a determination module (40) for determining whether the specific defect and/or impairment for which the signal profile of the reference signal from the reference pattern used for comparison is characteristic has occurred at least gradually,
wherein the determination module (40) is configured to make the determination on a common intersection between the signal profiles of the measurement signal from the fingerprint pattern and the reference signal from the reference pattern;
furthermore comprising
a test bench module (50) with a fuel gas test supply (51) for supplying fuel gas to an anode section of the fuel cell (10) in a test operation and an oxidation gas test supply (52) for supplying oxidation gas to a cathode section of the fuel cell (10) in the test operation, as well as an electrical test load (53) for discharging electrical power from the fuel cell (10) in the test operation;
a control module (55) for controlling operating parameters of the test operation of the fuel cell (10) on the test bench module (50), wherein
in the control module (55) at least one stress factor pattern is provided in which settings and/or critical profiles of operating parameters for causing faults and/or impairments in the fuel cell (10) during test operation are stored,
**characterized in that**
the system (100) further comprises: a diagnostic output module for outputting a diagnostic output signal, which includes a percentage diagnostic probability for the specific fault and/or impairment, the percentage of which is based on the intersection between the signal profiles of the measurement signal and the reference signal.

2. System (100) according to claim 1, wherein the at least one stress factor pattern provided in the control module (55) has a cyclic profile of operating parameters to achieve a cyclic profile of an output voltage of the fuel cell (10) with defined voltage peaks.

3. System (100) according to claim 1 or 2, wherein the comparison module (30) and/or the determination module (40) is configured to normalize the signal profiles of the measurement signal and the reference signal to a common zero point and/or scale, and to determine the common intersection based on an overlap of an amplitude and/or an amplitude frequency of the normalized signal profiles.

4. System (100) according to one of the preceding claims, further comprising: an editing module for editing a provided reference pattern based on an adaptation of the signal waveform of the reference signal in the reference pattern to the signal waveform of the measurement signal of the fingerprint pattern for which it was determined that the specific error and/or impairment, for which the signal waveform of the reference signal from the reference pattern is characteristic, has occurred at least gradually.

5. System (100) according to one of the preceding claims, wherein the measuring module (20) further comprises a signal generator (22) for applying an AC voltage-based excitation signal to the fuel cell (10), wherein at least one sensor (21) detects an AC voltage-based signal response resulting from an interaction between the excitation signal and the fuel cell (10).

6. System (100) according to one of the preceding claims, wherein at least one sensor (21) of the measuring module (20) is a
voltage sensor for detecting the output voltage of the fuel cell (10),
hydrogen sensor for detecting a hydrogen concentration on a cathode side,
conductivity sensor for detecting a conductivity of product water, and/or virtual sensor, which is emulated by means of a degradation model of analysis software on the measuring module (20).

7. Method for inducing and determining a specific fault and/or impairment in a PEM fuel cell (10), comprising the following steps:
measuring at least one operating parameter of the fuel cell (10) by acquiring the at least one operating parameter in the fuel cell (10) by means of at least one sensor (21), and outputting a fingerprint pattern with a time-dependent signal profile of a measurement signal;
comparing the signal profile of the measurement signal from the output fingerprint pattern with a signal profile of a reference signal from a reference pattern by providing various reference patterns with signal profiles of reference signals that are characteristic of different specific faults and/or impairments;
determining whether the specific fault and/or impairment for which the signal waveform of the reference signal from the reference pattern used for comparison is characteristic has occurred at least gradually, wherein the determination is based on a common intersection between the signal waveforms of the measurement signal from the fingerprint pattern and the reference signal from the reference pattern, further comprising the following steps:
performing a test operation on a test bench with a fuel gas test supply (51) for supplying a fuel gas to an anode section of the fuel cell (10) in a test operation and an oxidation gas test supply (52) for supplying an oxidation gas to a cathode section of the fuel cell (10) in the test operation, as well as an electrical test load (53) for dissipating electrical power from the fuel cell (10) in the test operation; and
controlling operating parameters of the test operation of the fuel cell (10) on the test bench (50) in accordance with at least one stress factor pattern, in which settings and/or time profiles of the operating parameters are stored to induce faults and/or impairments in the fuel cell (10) during the test operation, **characterized by** the steps:
outputting a diagnostic output signal that includes a percentage diagnostic probability for the specific fault and/or impairment, the percentage of which is based on the intersection between the normalized signal profiles of the measurement signal and the reference signal.

8. Method (100) according to claim 8, wherein at least one stress factor pattern has a cyclic profile of operating parameters to achieve a cyclic output voltage profile of the fuel cell (10) with defined voltage peaks.

9. Method according to claim 8 or 9, wherein the step of comparing and/or determining further comprises the following intermediate steps:
normalizing the signal profiles of the measurement signal and the reference signal to a common zero point and/or scale; and
determining the common intersection based on an overlap of an amplitude and/or an amplitude frequency of the normalized signal profiles.

10. A method according to any one of claims 8 to 11, further comprising the step of:
editing a provided reference pattern based on an adaptation of the signal waveform of the reference signal in the reference pattern to the signal waveform of the measurement signal of the fingerprint pattern for which it has been determined that the specific fault and/or impairment, for which the signal waveform of the reference signal from the reference pattern is characteristic, has at least partially occurred.

11. A method according to any one of claims 8 to 12, wherein the measurement step further comprises the following intermediate steps:
applying an AC-based excitation signal to the fuel cell (10) by means of a signal generator (22); and
capturing an alternating voltage-based signal response resulting from an interaction between the excitation signal and the fuel cell (10) resulting from the at least one sensor (21).

12. A method according to any one of claims 8 to 13, wherein the measuring step further comprises at least one of the following intermediate steps:
detecting the output voltage of the fuel cell (10) using a voltage sensor,
detecting a hydrogen concentration on a cathode side using a hydrogen sensor,
detecting a conductivity of product water using a conductivity sensor, and/or
emulating a virtual sensor using a degradation model of analysis software on the measuring module (20).

13. A computer program comprising instructions which, when executed by a computer, cause the computer to perform the steps of the method according to any one of claims 8 to 14.

## Revendications

1. Système (100) pour induire et détecter un défaut et/ou une défaillance spécifique dans une pile à combustible PEM (10), comprenant :
un module de mesure (20) mesurant au moins un paramètre de fonctionnement de la pile à combustible (10) et générant un signal d'empreinte digitale présentant un profil temporel, comprenant au moins un capteur (21) pour détecter ce paramètre ;
un module de comparaison (30) comparant le profil temporel du signal mesuré avec celui d'un signal de référence, ce module (30) utilise différents signaux de référence, chacun présentant un profil caractéristique d'un défaut et/ou d'une défaillance spécifique,
un module de détermination (40) permettant de déterminer si le défaut et/ou la défaillance spécifique, dont le profil de signal du signal de référence issu du motif de référence utilisé pour la comparaison est caractéristique, est apparu au moins progressivement, ce module de détermination (40) est configuré pour effectuer la détermination à l'intersection commune des profils de signal du signal de mesure issu du motif d'empreinte digitale et du signal de référence issu du motif de référence ; en outre, comprenant :
un module de banc d'essai (50) doté d'une alimentation en gaz combustible (51) pour alimenter une section anodique de la pile à combustible (10) en gaz combustible et d'une alimentation en gaz oxydant (52) pour alimenter une section cathodique de la pile à combustible (10) en gaz oxydant, ainsi qu'une charge électrique d'essai (53) pour décharger l'énergie électrique de la pile à combustible (10) pendant l'opération d'essai,
un module de commande (55) permet de contrôler les paramètres de fonctionnement lors de l'essai de la pile à combustible (10) sur le banc d'essai (50), ce module (55) comporte au moins un modèle de facteur de contrainte dans lequel sont stockés les réglages et/ou les profils critiques des paramètres de fonctionnement susceptibles de provoquer des défauts et/ou des dysfonctionnements de la pile à combustible (10) pendant l'essai,
le système (100) comprend en outre :
un module de sortie de diagnostic qui génère un signal de diagnostic, ce signal inclut un pourcentage de probabilité de diagnostic pour le défaut et/ou le dysfonctionnement considéré, ce pourcentage est calculé à partir de l'intersection des profils des signaux de mesure et de référence.

2. Système (100) selon la revendication 1, dans lequel le ou les modèles de facteurs de contrainte fournis par le module de commande (55) présentent un profil cyclique des paramètres de fonctionnement afin d'obtenir un profil cyclique de la tension de sortie de la pile à combustible (10) avec des pics de tension définis.

3. Système (100) selon la revendication 1 ou 2, dans lequel le module de comparaison (30) et/ou le module de détermination (40) est configuré pour normaliser les profils des signaux de mesure et de référence par rapport à un zéro et/ou une échelle commune, et pour déterminer leur intersection commune en se basant sur le chevauchement de l'amplitude et/ou de la fréquence d'amplitude des profils de signaux normalisés.

4. Système (100) selon l'une des revendications précédentes, comprenant en outre : un module d'édition pour éditer un modèle de référence fourni en fonction d'une adaptation de la courbe du signal de référence du signal de référence dans le modèle de référence au cours du signal du signal de mesure du modèle d'empreinte digitale pour lequel il a été déterminé que l'erreur et/ou la dégradation spécifique pour laquelle le cours du signal de référence du modèle de référence est caractéristique s'est produite, au moins progressivement.

5. Système (100) selon l'une des revendications précédentes, dans lequel le module de mesure (20) comprend en outre un générateur de signal (22) pour appliquer un signal d'excitation basé sur une tension alternative à la pile à combustible (10), dans lequel au moins un capteur (21) détecte une réponse de signal basée sur une tension alternative résultant d'une interaction entre le signal d'excitation et la pile à combustible (10).

6. Système (100) selon l'une quelconque des revendications précédentes, dans lequel au moins un capteur (21) du module de mesure (20) est un:
capteur de tension pour la détection de la tension de sortie de la pile à combustible (10),
capteur d'hydrogène pour la détection de la concentration d'hydrogène côté cathode,
capteur de conductivité pour la détection de la conductivité de l'eau produite,
et/ou
capteur virtuel, émulé sur le module de mesure (20) au moyen d'un modèle de dégradation du logiciel d'analyse.

7. Procédé d'induction et de détermination d'un défaut et/ou d'une défaillance spécifique dans une pile à combustible PEM (10), comprenant les étapes suivantes :
mesure d'au moins un paramètre de fonctionnement de la pile à combustible (10) par acquisition de ce paramètre au moyen d'au moins un capteur (21), et émission d'un signal d'empreinte digitale présentant un profil temporel ;
comparaison du profil du signal de mesure issu de l'empreinte digitale de sortie avec le profil d'un signal de référence issu d'une matrice de référence. Cette comparaison s'effectue en utilisant différentes matrices de référence dont les profils sont caractéristiques de divers défauts et/ou dysfonctionnements spécifiques
détermination de l'apparition progressive du défaut et/ou du dysfonctionnement spécifique, **caractérisé par** la forme d'onde du signal de référence, à partir de la matrice de référence utilisée pour la comparaison. Cette détermination repose sur l'intersection des formes d'onde du signal de mesure issu de l'empreinte digitale et du signal de référence. Les étapes suivantes sont réalisées :
réalisation d'un essai sur un banc d'essai équipé d'une alimentation en gaz combustible (51) pour alimenter l'anode de la pile à combustible (10), d'une alimentation en gaz oxydant (52) pour alimenter la cathode de la pile à combustible (10) et d'une charge électrique (53) pour dissiper la puissance électrique de la pile à combustible (10) et
contrôle des paramètres de fonctionnement de la pile à combustible (10) sur le banc d'essai (50) selon au moins un facteur de contrainte dans lequel les réglages et/ou les profils temporels des paramètres de fonctionnement sont enregistrés afin d'induire des défauts et/ou des dysfonctionnements de la pile à combustible (10) pendant l'essai,
**caractérisé par** les étapes suivantes :
émission d'un signal de diagnostic incluant un pourcentage de probabilité de diagnostic pour le défaut et/ou le dysfonctionnement spécifique, ce pourcentage étant basé sur l'intersection entre les profils normalisés du signal de mesure et du signal de référence.

8. Procédé (100) selon la revendication 8, dans lequel au moins un modèle de facteur de contrainte présente un profil cyclique des paramètres de fonctionnement afin d'obtenir un profil de tension de sortie cyclique de la pile à combustible (10) avec des pics de tension définis.

9. Procédé selon la revendication 8 ou 9, dans lequel l'étape de comparaison et/ou de détermination comprend les étapes intermédiaires suivantes :
normalisation des profils de signal du signal de mesure et du signal de référence par rapport à un zéro et/ou une échelle communs ; et
détermination de l'intersection commune basée sur le chevauchement de l'amplitude et/ou de la fréquence d'amplitude des profils de signal normalisés.

10. Procédé selon l'une quelconque des revendications 8 à 11, comprenant en outre l'étape suivante :
modification d'un motif de référence fourni, basée sur l'adaptation de la forme d'onde du signal de référence à la forme d'onde du signal de mesure du motif d'empreinte digitale pour lequel il a été déterminé que le défaut et/ou la défaillance spécifique, dont la forme d'onde du signal de référence est caractéristique, s'est produit au moins partiellement.

11. Procédé selon l'une quelconque des revendications 8 à 12, dans lequel l'étape de mesure comprend en outre les étapes intermédiaires suivantes :
application d'un signal d'excitation alternatif à la pile à combustible (10) au moyen d'un générateur de signaux (22) ; et
détection d'une réponse de signal de tension alternative résultant de l'interaction entre le signal d'excitation et la pile à combustible (10) à l'aide d'au moins un capteur (21).

12. Procédé selon l'une quelconque des revendications 8 à 13, dans lequel l'étape de mesure comprend en outre au moins une des étapes intermédiaires suivantes :
détection de la tension de sortie de la pile à combustible (10) à l'aide d'un capteur de tension ;
détection de la concentration d'hydrogène côté cathode à l'aide d'un capteur d'hydrogène ;
détection de la conductivité de l'eau produite à l'aide d'un capteur de conductivité ;
et/ou
émulation d'un capteur virtuel à l'aide d'un modèle de dégradation du logiciel d'analyse du module de mesure (20).

13. Programme informatique comprenant des instructions qui, lorsqu'elles sont exécutées par un ordinateur, amènent ce dernier à réaliser les étapes du procédé selon l'une quelconque des revendications 8 à 14.
